# EUROPEAN PATENT APPLICATION

(11) **EP 4 539 175 A1**
(43) Date of publication of application: **16.04.2025**
(21) Application number: 23203482.7
(22) Date of filing: 13.10.2023
(51) Int. Cl.: H01M 8/04089, H01M 8/0444, H01M 8/04537, H01M 8/04746, H01M 8/0612, H01M 8/12, C01B 3/32, B01F 23/00, B01F 23/20

(54) **METHOD AND HIGH-TEMPERATURE FUEL CELL SYSTEM FOR PREPARING A PROCESS GAS**

(71) Applicant: AVL List GmbH, 8020 Graz (AT)
(72) Inventor: Schluckner, Christoph, 8020 Graz (AT); Erharter, Lukas, 8020 Graz (AT); Balint, Andras, 6000 Kecskemét (HU); Neubauer, Raphael, 8020 Graz (AT); Lawlor, Vincent, 8020 Graz (AT)
(74) Representative: Gamper, Bettina

(57) **Abstract**

The present invention relates to method and a high-temperature fuel cell system for preparing a process gas, amongst other steps by: introducing (pS14) steam generated by an evaporation means into a mixing chamber, injecting (pS24) through a nozzle atomized raw fuel in the form of a spray into the mixing chamber, and mixing (S40) the process gas by converging the process stream in the common mixing chamber. The invention particularly provides introducing (pS34) recirculated high-temperature anode off-gas into the same common mixing chamber; and evaporating (S42) the atomized raw fuel by the enthalpy submitted in the mixing chamber by the introduced high-temperature anode off-gas.

## Description

The present application relates to a method for preparing a process gas in a process stream of fluids proceeded before feeding to an anode side of a high-temperature fuel cell, and a corresponding high-temperature fuel cell system for preparing the process gas, wherein, more particular, said process gas is determined for use in a downstream steam reforming process for producing a hydrogen rich fuel gas to be fed into the high-temperature fuel cell.

The technique of the invention is preferably applied in the field of high-temperature fuel cells, embodied as a type of solid oxide fuel cells (SOFC). Due to efficiency advantages, SOFC-type fuel cells are normally used for large scale, stationary or semi-stationary applications. Such large scale applications usually allow for enough space, weight and complexity required by an elaborated structure of sub-systems in the periphery of such high-temperature fuel cell systems.

As an economical and logistical advantageous example for the periphery of large-scale high-temperature fuel cell systems, a steam reformer is provided as a sub-system upstream to the fuel cell stacks. The process of steam reforming raw fuels like liquid methanol enables production of hydrogen rich fuel gas just at the point of use and directly before consumption. As a result, an expensive supply chain from production to storage of correspondingly enormous amounts of grey hydrogen or blue hydrogen for a large-scale fuel system can be avoided by installing a readily available liquid supply of methanol.

Upstream to the steam reforming process the raw fuel needs to experience a phase change into the form of gaseous or evaporated fluid in preparation of a process gas to be used upstream to the steam reforming process. Said process gas is a mixture that also contains other components like steam or fluid of evaporated water and water content, wherein the latter might also depend on a start-up phase or phase of normal operation of a high-temperature fuel cell system.

In addition, for reasons of fuel efficiency and thermal efficiency, high-temperature fuel cell systems use a recirculation of part or all of the anode off-gas for reducing waste of unconsumed hydrogen content and thermal support of preheating the process stream at process stages upstream to the high-temperature fuel cell.

In a known plant construction, an evaporator unit evaporates the raw fuel and a mixer unit mixes the evaporated raw fuel with steam as a carrier fluid thus forming a process gas having a propellant flow for the transportation of evaporated raw fuel along the process stream. The fuel and steam are serially provided to downstream in the process stream, a premixer unit mixes the process gas with a premix proportion of anode off-gas from the recirculation of the anode off-gas to form a premix process gas exiting the premixer unit. The premix proportion of the anode off-gas in the premix process gas is controlled in relation to the supplied fresh raw fuel contained in the upstream prepared process gas, depending on operation conditions of the fuel cell system like e.g. a residual hydrogen content in the high-temperature anode off-gas, a load request of the high-temperature fuel cell, a temperature of the process gas upstream to the premixer unit and the like.

However, the described SOFC system has a complex system design including numerous components of plant construction along the process stream as well as accompanying balance of plant (BoP) components for thermal support at different process stages. Hence, there is demand for reducing complexity and investment costs in the plant construction for commercial use of large scale high-temperature solid oxide fuel cell systems.

It is an object of the invention to provide a fuel processing technique in a high-temperature fuel cell system capable of reducing complexity of plant construction and investment costs accordingly.

It is another object of the invention to provide a fuel processing technique for a high-temperature fuel cell system allowing for faster response in preparation of a process gas to transient load changes of the fuel cell.

The objects are solved by a method for preparation of a process gas by the steps defined in claim 1 and a corresponding fuel cell system for preparation of a process gas having the features of claim 14. Further features and details of the invention result from the dependent claims, the specification, and the drawings. Features and details described in connection with the claimed method according to the invention also apply in context of the claimed fuel cell system according to the invention, and vice versa, so that the individual aspects of the invention are or can always be mutually referred to in the disclosure.

The invention proposes a method for preparing a process gas in a process stream of fluids proceeded before feeding to anode side of a high-temperature fuel cell. More particular, said process gas is determined for use in a downstream arranged steam reforming process for producing a hydrogen rich fuel gas to be fed into the high-temperature fuel cell arranged downstream to the steam reforming process. To this end, the method comprises the steps of supplying water from a water source, evaporating the supplied water by supplying thermal energy to an evaporation means, and introducing steam generated by the evaporation means into a mixing chamber. It is noted that the thermal energy might be sourced internal or external to the system, and particularly might be sourced depending on an operation status, e.g. a start-up phase of the fuel cell system. In this context, the steam to be introduced into the mixing chamber might have a variable proportion of evaporated water and non-evaporated, still liquid water, each in a vice versa opposite related range from 1 to 99 %.

Further, the method comprises the steps of supplying a raw fuel from a fuel source, pressurizing the supplied raw fuel that will be atomized by means of a nozzle by supplying mechanical energy, and injecting through the nozzle atomized raw fuel in the form of a spray into the mixing chamber, as well as a step of mixing the process gas by converging the process stream in the common mixing chamber. It is noted that the mechanical energy for pressurization might be provided by means of a suited type of pump, like a displacement pump used for liquid fuel injection, and the raw fuel is determined as a liquid hydrocarbon fuel.

In particular according to the invention, the process gas to be prepared in this method further comprises, as another gas component, a high-temperature anode off-gas recirculated from the high-temperature fuel cell. To this end, the method involves the following active and passive step of introducing the high-temperature anode off-gas into the same common mixing chamber, and evaporating the atomized raw fuel by the enthalpy submitted in the mixing chamber by the introduced high-temperature anode off-gas. In this context it is noted that the process gas contains at least two components which are converged at once in one and the same process stage. The at least two components are anode recirculation and steam during a heat up or steam purge period, or anode recirculation and fuel during nominal operation, or fuel and steam during heat up or cool down period, but may also include all recirculation, steam and fuel during heat up period, part load operation, transient operation or cool down period. In other words, the step in supply of anode off-gas to the process stream, the steps in supply of water to the process stream, and the steps in supply of raw fuel to the process stream are performed in parallel up to the process stage of the common mixing chamber where further processes occur to the process stream.

Moreover, the invention analogously proposes a high-temperature fuel cell system for preparing a process gas in a process stream of fluids proceeded before feeding to an anode side of a high-temperature fuel cell. The fuel cell system comprises the system components of a high-temperature fuel cell, preferably a solid oxide fuel cell for power generation, a recirculation line for recirculation of the anode off-gas to the process stream; an exhaust gas line to combust unreacted fuel and distribute thermal energy to the process stream or otherwise, a raw fuel supply for supplying raw fuel to the process stream and a pump for pressurizing the raw fuel; a water supply for supplying water to the process stream and an evaporator for evaporation of the water. Further the fuel system comprises a mixer device including a mixing chamber for converging the process stream, a nozzle for injecting an atomizing spray of the pressurized raw fuel into the mixing chamber, and an inlet for introducing steam of the evaporated water and/or water content in the steam and/or pure liquid water into the mixing chamber, or alternatively, a nozzle for injection of the steam of the evaporated water and/or water content in the steam and/or pure liquid water into the mixing chamber, preferably integrally formed with the nozzle for injecting the raw fuel.

In particular according to the invention, the fuel cell system comprises an inlet for introduction of the anode off-gas into the same common mixing chamber.

In terms of this disclosure the following definitions and understanding underlies the above determined invention. The raw fuel is a kind of liquid hydrocarbon fuel which can also be used for purposes of combustion in heating or power generation applications, preferably methanol, or ethanol or related fuels. The process stream indicates a flow of different gases or fluids to be processed up to the feeding of an anode side of the fuel cell. The process gas is a mixture of steam having any proportion i.e.1-99% of evaporated and condensed water, a raw fuel present in any stage of an atomized or evaporated liquid or diffused gas while mixing with the fluid humid content of the steam, and a premix proportion of anode off-gas which is recirculated to the anode via the process stream, wherein due to presence of anode off-gas, said process gas might otherwise also be recognized as a premix process gas. A fuel gas, described later on, is a product of a steam reforming process containing a sufficient concentration of hydrogen to operate the electrochemical reaction in the high-temperature fuel cell for generating power while simultaneously maintaining a steam to carbon ratio preventing carbon deposition within the reformer and or the fuel cell anode.

Thus, for the first time, the invention realizes an integration of a mixing process of a process gas containing steam and raw fuel together with a premixing process of a premix process gas containing the process gas and anode off-gas at one stage of process stream, thereby combining occurrence of several sub-processes at the same time or in parallel to the process stream. Such sub-processes in parallel relate to the feeding of a mixer with steam, atomized raw fuel and hot anode off-gas, and the sub-processes of mixing of said components of the process gas while effecting a phase change from the atomized liquid droplets of the fuel spray and or steam/liquid water supply into an evaporated gaseous fuel and fluid. In particular, the latter process is for the first time realized as direct evaporation of atomized raw fuel in exposure to a mass flow of high-temperature anode off-gas, wherein the mixer itself may facilitate the evaporation of liquids from heat supplied by conduction from the mixer walls, ribs, channels etc.

As a first advantage, the technique according to the invention substantially reduces investment costs in plant construction of SOFC systems due a reduced number of components and complexity in the plant construction of process stages as well as accompanying BoP components for thermal support at each stage. This reduction of complexity focused on a section of plant construction upstream to a steam reformer is based on the integration of a mixer process stage for forming the process gas and a premixer process stage for forming the premix process gas containing recirculated anode off-gas within one and the same process stage.

A second advantage of the technique according to the invention is the achievement of a faster response of the whole process stream in the preparation of process gas when changing e.g. variable ratios of gas components in reaction to transient load changes of the fuel cell or variable concentrations of species within the gas components like e.g. hydrogen content in anode off-gas or liquid water content in the steam.

Moreover, in a third advantage of the technique according to the invention, the energy of enthalpy delivered by the hot recirculated anode off-gas is directly used for the evaporation process in the required phase change of the liquid raw fuel. In this way a dedicated supply of heat or means of BoP for a dedicated evaporation unit can be omitted with respect to a basic embodiment of the invention. Since the recirculated anode off-gas has higher temperatures as steam and sharing a significant proportion of gas content in the process gas, the mass flow of the anode off-gas provides a substantially increased amount of enthalpy and impact of flow impulse interacting on the atomized fuel spray for evaporation than achievable by conventional plant construction providing supply of thermal energy by steam or external heat exchanger to a mixing chamber.

According to a preferred aspect of the invention, the steps of introducing the steam, injecting the atomized raw fuel spray, and/or introducing the high-temperature anode off-gas into the common mixing chamber are performed in parallel with respect to the process stream. Despite to the fact that these components of process gas enter the process stream at the same process stage, i.e. each enters at the mixing chamber, inlets or nozzles might be positioned or directed differently upstream or downstream within said mixing chamber.

According to an aspect of the invention, the supply of thermal energy for the evaporation of liquid fuel and or liquid water involves the step of: delivering system heat collected and distributed from the high-temperature fuel cell and off gas burner by means of a fuel cell system. In this way the thermal and overall efficiency of the fuel cell system is improved.

According to an aspect of the invention, if, in a start-up phase of the high-temperature fuel cell system, the supply of thermal energy to the evaporation means is insufficient for evaporation of water, the introduction of steam into the mixing chamber involves at least a high content of water in the steam. Hereby, the evaporation of water is promoted in the next step supported by the enthalpy of the hot anode off-gas. Furthermore to this aspect, the system can comprise a designated start up burner and or the off-gas burner can be used. Electrical air heating may also be optionally included. The system heat represents the key source for evaporating the water which may occur initially in the evaporator and/or the mixer. The hot anode off gas is air and/or purge gas (not shown in schematics) and/or steam and/or fully or partially reformed fuel.

Building on the previous aspect of the invention, the introduction of steam into the mixing chamber also involves injection by means of a nozzle. Thus the evaporation of water in the mixing chamber is further supported. However, also liquid water can be used alternatively, wherein a passive nozzle could introduce steamed water and an active nozzle could inject liquid water.

According to an aspect of the invention, the injection involved in the introduction of steam and the injection of atomized raw fuel into the mixing chamber uses the same nozzle. Hereby, a further integration and reduction of components is achieved.

The nozzle is preferably designed to inject the media into the mixer in a way to promote media mixing and/or heat transfer within the mixing chamber. The nozzle can be a multi-nozzle comprising a plurality of nozzles.

According to an aspect of the invention, the mixing of the process gas involves supplying thermal energy to the mixing chamber by means of a heat exchanger. Thus another independent thermal influence is provided for controlling a stable process of evaporation and mixing.

Building on the previous aspect of the invention, the optional additional supply of thermal energy for the mixing of the process gas involves the step of: delivering system heat collected and distributed from the high-temperature fuel cell by means of the fuel cell system. The fuel cell system includes an off-gas burner. In this way the thermal and overall efficiency of the fuel cell system is improved.

According to an aspect of the invention, the introduction of the high-temperature anode off-gas into the mixing chamber is supplied by the step of: recirculating the high-temperature anode off-gas from the anode side of the high-temperature fuel cell in operation of the high-temperature of the fuel cell.

According to an aspect of the invention, said prepared process gas is determined for use in a steam reforming process for producing a hydrogen rich fuel gas to be fed into the high-temperature fuel cell, the method further comprising the steps of: steam reforming the product gas by means of a steam reformer device downstream to the mixing of the process gas, involving supplying thermal energy to the steam reformer device by means of a heat exchanger. To this end, the prepared process gas is reformed to a hydrogen enriched fuel gas and steam for coking prevention.

Building on the previous aspect of the invention, the supply of thermal energy for the steam reforming of the product gas involves the step of: delivering system heat collected and distributed from the high-temperature fuel cell by means of the fuel cell system. In this way the thermal and overall efficiency of the fuel cell system is improved.

According to further elaborated aspects of the invention, the stability of processes or response on changes might be controlled by:
1) Setting a metering of the injection and or plurality of injections of the raw fuel into the mixing chamber depending on a load request of the high-temperature fuel cell;
2) Optionally: Setting a metering of the injection of the raw fuel into the mixing chamber depending on a desired start up, cool down, hot standby process gas composition and or protection gas composition. Protection gas can be a gas composed of steam, evaporated fuel, reformed fuel gas and or an external inert source such as N2 or an N2/H2 mixture.
3) Setting a pressure of pressurization for atomization of the raw fuel depending on a spray pattern or a resulting spray embodiment of the raw fuel in the mixing chamber;
4) Optionally: Setting a temperature of the raw liquid fuel depending on a spray pattern or a resulting spray embodiment of the raw fuel in the mixing chamber
5) Setting a premix proportion of the high-temperature anode off-gas for the introduction of the high-temperature anode off-gas, as a gas component of the process gas, depending on an operation condition of the high-temperature fuel cell, wherein, the operation condition preferably includes a residual hydrogen content in the high-temperature anode off-gas, a load request of the high-temperature fuel cell, and/or a temperature of the process gas downstream to the mixing chamber;
6) Setting a premix proportion of the high-temperature anode off-gas, as the gas component of the process gas, for the introduction of the high-temperature anode off-gas into the mixing chamber depending on the enthalpy for the evaporation of the atomized raw fuel submitted in the mixing chamber by the introduced high-temperature anode off-gas, and or a desired process gas steam to carbon and/or
7) Setting the optional additional supply of thermal energy for the mixing of the process gas depending on need for additional enthalpy for the evaporation of the atomized raw fuel, under consideration of the enthalpy submitted in the mixing chamber by the introduced high-temperature anode off-gas, based on a metering of the injection of the raw fuel, a metering and/or a measured temperature of the introduction of the high-temperature anode off-gas and or a desired process gas steam to carbon and/or
8) Setting the optional additional supply of thermal energy for the mixing of the process gas depending on need for additional enthalpy for the evaporation of the atomized raw fuel and liquid water, under consideration of the enthalpy submitted in the mixing chamber by the introduced high-temperature anode off-gas, based on a metering of the injection of the raw fuel, a metering and/or a measured temperature of the introduction of the high-temperature anode off-gas and or a desired process gas steam to carbon .

According to an aspect of the invention, the raw fuel is methanol.

According to another aspect of the invention, a suitable fuel cell system for preparing said process gas comprises: a steam reformer device arranged downstream to the mixer device, for steam reforming the process gas to a hydrogen enriched fuel gas to be fed to an anode side of the high-temperature fuel cell, a means of regulating a recirculating a portion of the anode of gas to the process gas stream directly inside the mixing chamber and a system heat distribution system for collecting thermal energy dissipated by system components of at least the high-temperature fuel cell and providing supply of thermal energy from the uncirculated portion of anode exhaust directly via heat transfer from the exhaust gas and/or post a combustion process, for heat exchange device to the evaporator, the mixing chamber and/or the steam reformer device and potentially other fuel cell system media, components and/or processes requiring heat..

Further objectives, advantages, features and applications of the present invention arise from the following description of the exemplary embodiments with reference to the drawings. In the drawing:
- Fig. 1: shows a schematic flow chart of method steps to be performed in the method for preparation of process gas according to an embodiment of the present invention;
- Fig. 2: shows a schematic block diagram of the high-temperature fuel cell system for preparation of process gas according to an embodiment of the present invention; and
- Fig. 3: shows a schematic illustration of effects occurring in the presence of hot anode off-gas during the process of direct evaporation of raw fuel according to a core aspect of the invention.

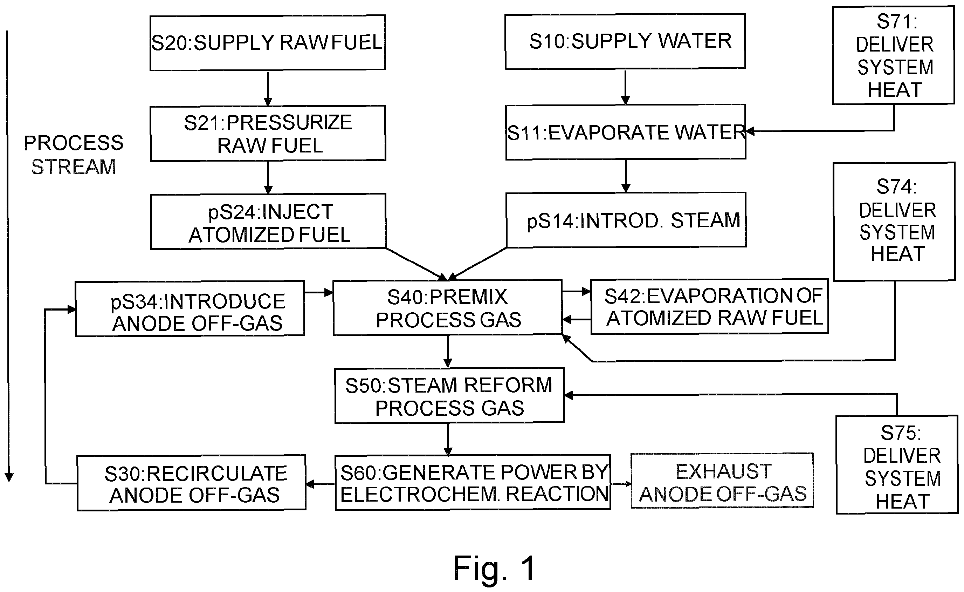

Fig. 1 schematically indicates the consecutive and parallel performance of method steps with respect to the process stream focussed on a section of a fuel cell system upstream to an SOFC or SOFC stack.

At a first step S10: water provided by a reservoir or feed line is supplied and, in a next step S11: water is evaporated for generating steam provided at a mixing chamber of a mixer device. In another step S20: methanol is supplied as the raw fuel from a tank and, in a next step S21: the fuel is pressurized by an injection pump upstream to an injection nozzle provided at the mixing chamber of the mixer device. Further, in a step of recirculation S30: hot anode off-gas is recirculated from an anode side of the SOFC and provided at the mixing chamber of the mixer device. Upstream to the steam reforming process the process gas may also contain a fluid of evaporated liquid fuel and liquid fuel content.

In parallel steps (pS) with respect to the process stream, pS14: the steam of evaporated water is introduced into the mixing chamber, pS24: the pressurized raw fuel is injected and atomized as a spray body into the mixing chamber, and pS34: the recirculated high-temperature anode off-gas is introduced into the mixing chamber.

Immediately after these parallel steps, a step of S40: mixing the process occurs effected or supported by exchange of impulses of the introduced and injected mass flows of the components while being converged in the common mixing chamber. At the same time a step of S24: evaporation of the atomized droplets of the injected spray body of raw fuel in the mixing chamber is effected by the enthalpy, i.e. by the impact of thermal energy and intruding flow impulse which is exerted on the liquid phase droplets of raw fuel by the high-temperature anode off-gas recirculated from the SOFC. Due to the direct thermal and flow dynamic impact of the high-temperature anode off-gas on the atomized raw fuel in the mixing chamber, this step S24 is more aptly referred to as a direct fuel evaporation.

After the step S24 of direct fuel evaporation in presence of anode off-gas and the simultaneous step S40 of mixing said gas components, the as prepared process gas flows to a downstream section of the SOFC system for further processing as follows.

The process gas is subjected to a step of S50: steam reforming reaction by introduction of a significant proportion of steam for separating hydrogen species from the process gas for producing a fuel gas having an enriched hydrogen concentration. The fuel gas is fed to an anode side of the SOFC for the step of S60: power generation by electrochemical reaction of the hydrogen in the fuel gas and oxygen of air supplied to a cathode side (not depicted) of the SOFC. A portion of that anode off-gas exiting the anode side of the SOFC at high temperatures is recirculated in the step of S30: connecting the end of the described process stream to the process stage of parallel steps pS14, pS24 and pS34 before converging the process stream in the step of 40 for mixing the process gas. The other portion is exhausted from the system and is typically combusted to provide all or a portion of the heat to be delivered to S71, S74 and S75

In addition a step of S71: delivering system heat for the thermal supply in support of the step of 11: evaporation of water, an optional step of S74: additionally delivering system heat for thermal support of the step of S40: mixing the process gas, and a step of S75: delivering system heat for the thermal supply in support of the step of 50: steam reforming of process gas, are conducted for distribution of system heat collected from the SOFC.

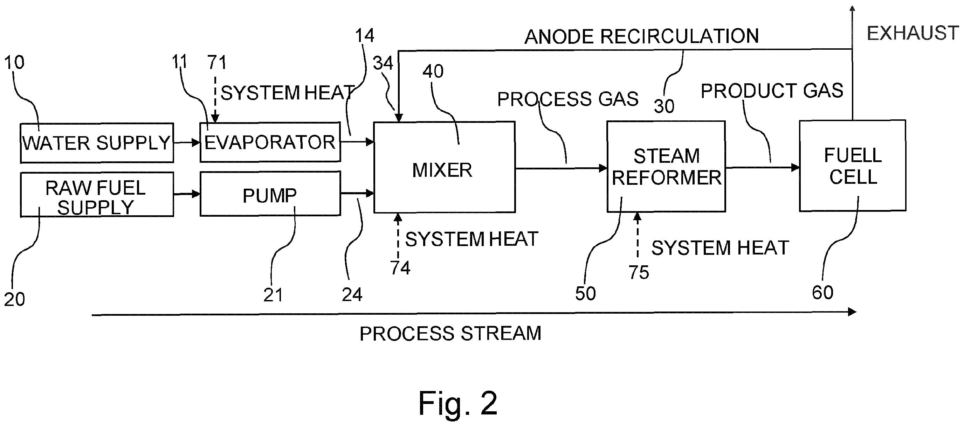

In Fig. 2 a high-temperature fuel cell system is basically represented, in an upstream direction, by the system components of a SOFC type fuel cell 60, a steam reformer 50 for reforming the process gas into a hydrogen enriched fuel gas, and a mixer device having a mixing chamber 40. The mixer device has a steam inlet 14 in the form of a single or plurality thereof, mouth(s), confined orifice(s), nozzle(s) or diffusor(s) for introducing steam into the mixing chamber 40. The mixer device also comprises a single or plurality of fuel nozzle(s) 24 for injecting the pressurized raw fuel in the form of a spray body of atomized droplets into the mixing chamber 40. The nozzle(s) may have a single or plurality of holes for fuel injection. Furthermore, the mixer device includes an anode off-gas inlet 34 in the form of a mouth or a diffusor for introducing the anode off-gas into the mixing chamber.

The steam inlet 14 is connected to an evaporator 11 supplied by a water reservoir 10. The fuel nozzle 24 is connected to an injection pump 21 supplied by a liquid methanol or other liquid hydrocarbon fuel stored in a fuel tank. The anode off-gas inlet 34 is connected to a recirculation line 30 collecting the anode off-gas exiting from the anode side of the fuel cell 60.

An exhausted portion of the anode off gas can be supplied to an exhaust gas burner (not depicted), where by unreacted fuel is typically mixed with exhaust air and combusted in order to provide heat at process stages upstream to the high-temperature fuel cell. Thus the system architecture is designed to optimize the distribution of anode exhaust, containing some unreacted fuel and steam between a return line to the anode where fuel is reacted to generate heat and electricity and an exhaust path where fuel is reacted to supply thermal energy for the system thermal balance, which is ideally self-sustaining. The off gas burner is a key source of thermal energy in the system for the evaporation process.

A heat distribution system 70 (partially indicated) collects heat dissipated by the fuel cell 60 via combustion of exhaust gases from the anode and cathode and distributes the system heat by means of a controlled mass flow of a heat exchange fluid via connection line 71 leading to the evaporator 11, via connection line 74 leading to a heat exchanger of the mixer device arranged in thermal contact with the mixing chamber 40, and via connection line 75 leading to a heating section arranged in the steam reformer 50. The system heat is distributed in parallel in this embodiment. Alternatively, the system heat is distributed in a serial connection.

In a modified embodiment, the fuel nozzle 24 can also be connected to the evaporator 11 by means of a switchable valve connection, preferably for the situation that the steam exiting the evaporator has a high liquid water content, like e.g. in a start-up phase. In another modified embodiment, a dedicated nozzle designed for hybrid use of fuel and water injection can replace or be provided in addition to the fuel nozzle 24 and the steam inlet 14. Alternatively, mixing the fuel and water is conducted prior to evaporating,

In a modified embodiment, the anode off-gas inlet 34 comprises a diffusor for spreading directions of intrusion of the mass flow of the anode off-gas into the spray body of the injected raw fuel, wherein a direction of the anode off-gas inlet 34 is directed in an opposite direction or a direction in an angle of 90° or more with respect to a direction of a central axis of the fuel nozzle 24 or spray body.

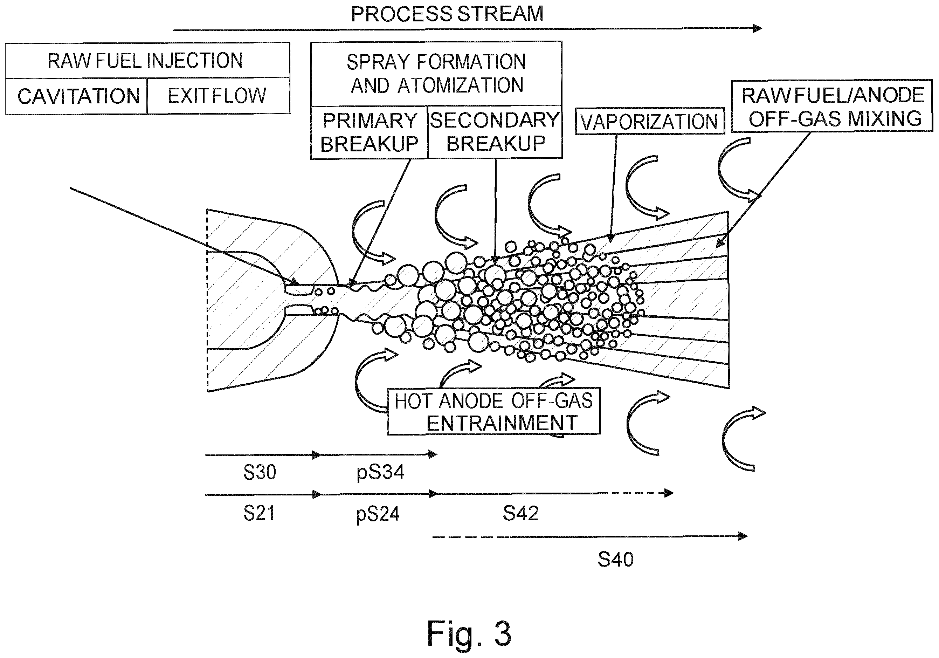

Fig. 3 illustrates a spray body of the raw fuel injected into the mixing chamber 40 at the essential step S24 of direct fuel evaporation in presence of anode off-gas. Due to cavitation when exiting the nozzle under high pressure, the raw fuel is atomized, while the spray body passes a primary break up with no interaction with an ambient, followed by a secondary break up with increasing interaction of entrainment of the ambient. The ambient is provided by the hot anode off-gas having thermal and dynamic impact on the atomized droplets of the expanding spray body. With a decreasing density of the expanded spray body, the raw fuel in the atomized droplets vaporizes into the mixture of steam and anode off-gas forced by the enthalpy submitted into the mixing chamber 40 by the hot anode off-gas.

### List of reference characters

- 10: water supply
- 11: evaporator
- 14: inlet/nozzle for steam
- 20: raw fuel supply
- 21: pressurizing pump
- 24: nozzle for raw fuel
- 30: recirculation line
- 34: inlet for anode off-gas
- 40: mixing chamber
- 50: steam reformer device
- 60: high-temperature fuel cell
- 70: heat distribution system 70

## Claims

1. A method for preparing a process gas in a process stream of fluids proceeded before feeding to anode side of a high-temperature fuel cell, the method comprising the steps of:
supplying (S10) water from a water source, evaporating (S11) the supplied water by supplying thermal energy to an evaporation means, and introducing (pS14) steam generated by the evaporation means into a mixing chamber;
supplying (S20) a raw fuel from a fuel source, pressurizing (S21) the supplied raw fuel that will be atomized by means of a nozzle by supplying mechanical energy, and injecting (pS24) through the nozzle atomized raw fuel in the form of a spray into the mixing chamber; and
mixing (S40) the process gas by converging the process stream in the common mixing chamber;
**characterized in that**
the process gas further comprises, as another gas component, a high-temperature anode off-gas recirculated from the high-temperature fuel cell, wherein the method further comprises the active and passive step of:
introducing (pS34) the high-temperature anode off-gas into the same common mixing chamber; and
evaporating (S42) the atomized raw fuel by the enthalpy submitted in the mixing chamber by the introduced high-temperature anode off-gas.

2. The method for preparing a process gas according to claim 1, wherein the steps of introducing (pS14) the steam, injecting (pS24) the atomized raw fuel spray, and/or introducing (pS34) the high-temperature anode off-gas into the common mixing chamber are performed in parallel with respect to the process stream.

3. The method for preparing a process gas according to any preceding claim, wherein the supply of thermal energy to the evaporation means for the evaporation (S11) of water involves the step of:
delivering (S71) system heat collected and distributed from the high-temperature fuel cell by means of a fuel cell system.

4. The method for preparing a process gas according to any preceding claim, wherein, if, in a start-up phase of the high-temperature fuel cell system, the supply of thermal energy to the evaporation means is insufficient for evaporation (S11) of water, the introduction (pS14) of steam into the mixing chamber involves at least a high content of water in the steam.

5. The method for preparing a process gas according to any preceding claim, wherein the introduction (pS14) of steam into the mixing chamber also involves injection by means of a nozzle.

6. The method for preparing a process gas according to claim 5, wherein the injection involved in the introduction (pS14) of steam and the injection (pS24) of atomized raw fuel into the mixing chamber uses the same nozzle.

7. The method for preparing a process gas according to any preceding claim, wherein the mixing (S40) of the process gas involves supplying thermal energy to the mixing chamber by means of a heat exchanger.

8. The method for preparing a process gas according to claim 7, wherein the optional additional supply of thermal energy for the mixing (S40) of the process gas involves the step of:
delivering (S74) system heat collected and distributed from the high-temperature fuel cell by means of the fuel cell system.

9. The method for preparing a process gas according to any preceding claim, wherein the introduction (pS34) of the high-temperature anode off-gas into the mixing chamber is supplied by the step of:
recirculating (S30) the high-temperature anode off-gas from the anode side of the high-temperature fuel cell in operation of the high-temperature of the fuel cell.

10. The method for preparing a process gas according to any preceding claim, wherein said prepared process gas is determined for use in a steam reforming process for producing a hydrogen rich fuel gas to be fed into the high-temperature fuel cell, the method further comprising the steps of:
steam reforming (S50) the product gas by means of a steam reformer device downstream to the mixing (S40) of the process gas, involving supplying thermal energy to the steam reformer device by means of a heat exchanger.

11. The method for preparing a process gas according to claim 10, wherein the supply of thermal energy for the steam reforming (S50) of the product gas involves the step of:
delivering (S75) system heat collected and distributed from the high-temperature fuel cell by means of the fuel cell system.

12. The method for preparing a process gas according to any preceding claim, further comprising at least one of the steps of:
setting a metering of the injection (pS24) of the raw fuel into the mixing chamber depending on a load request of the high-temperature fuel cell;
setting a pressure of pressurization (S21) for atomization of the raw fuel depending on a spray pattern or a resulting spray embodiment of the raw fuel in the mixing chamber;
setting a raw fuel inlet temperature (S21) for atomization of the raw fuel depending on a spray pattern or a resulting spray embodiment of the raw fuel in the mixing chamber;setting a premix proportion of the high-temperature anode off-gas for the introduction (pS34) of the high-temperature anode off-gas, as a gas component of the process gas, depending on an operation condition of the high-temperature fuel cell, wherein, the operation condition preferably includes a residual hydrogen content in the high-temperature anode off-gas, a load request of the high-temperature fuel cell, and/or a temperature of the process gas downstream to the mixing chamber;
setting a premix proportion of the high-temperature anode off-gas, as the gas component of the process gas, for the introduction (pS34) of the high-temperature anode off-gas into the mixing chamber depending on the enthalpy for the evaporation (S42) of the atomized raw fuel submitted in the mixing chamber by the introduced high-temperature anode off-gas, and/or
setting the optional additional supply of thermal energy for the mixing (S40) of the process gas depending on a need for additional enthalpy for the evaporation (S42) of the atomized raw fuel, under consideration of the enthalpy submitted in the mixing chamber by the introduced high-temperature anode off-gas, based on a metering of the injection (pS24) of the raw fuel, a metering and/or a measured temperature of the introduction (pS34) of the high-temperature anode off-gas.

13. The method for preparing a process gas according to any preceding claim, wherein the raw fuel is methanol.

14. A high-temperature fuel cell system for preparing a process gas in a process stream of fluids proceeded before feeding to an anode side of a high-temperature fuel cell, in particular, according to the method of any of the preceding claims, the system comprising:
a high-temperature fuel cell, preferably a solid oxide fuel cell (60) for power generation;
a recirculation line (30) for recirculation of the anode off-gas to the process stream;
a raw fuel supply (20) for supplying raw fuel to the process stream and a pump (21) for pressurizing the raw fuel;
a water supply (10) for supplying water to the process stream and an evaporator (11) for evaporation of the water; and
a mixer device including:
a mixing chamber (40) for converging the process stream,
a nozzle (22) for injecting an atomizing spray of the pressurized raw fuel into the mixing chamber (40), and
an inlet (14) for introduction steam of the evaporated water and/or water content in the steam into the mixing chamber (40), or
a nozzle for injection of the steam of the evaporated water and/or water content in the steam into the mixing chamber (40), preferably integrally formed with the nozzle (22) for injecting the raw fuel;
**characterized in that** the mixer device further comprises:
an inlet (34) for introduction of the anode off-gas into the same common mixing chamber (40).

15. The high temperature fuel cell system according to claim 14, further comprising the system components of:
a steam reformer device (50) arranged downstream to the mixer device, for steam reforming the process gas to a hydrogen enriched fuel gas to be fed to an anode side of the high-temperature fuel cell (60), and
a system heat distribution system (70) for collecting thermal energy dissipated by system components of at least the high-temperature fuel cell (60) and providing supply of thermal energy for the evaporator (11), the mixing chamber (40) and/or the steam reformer device (50).
